# EUROPEAN PATENT APPLICATION

(11) **EP 3 605 422 A1**
(43) Date of publication of application: **05.02.2020**
(21) Application number: 19188053.3
(22) Date of filing: 24.07.2019
(51) Int. Cl.: G06Q 20/06

(54) **TRANSACTION CONTROL DEVICE, TRANSACTION CONTROL METHOD**

(30) Priority: 31.07.2018 JP 2018143081
(71) Applicant: FUJITSU LIMITED, Kanagawa, 211-8588 (JP)
(72) Inventor: Shima, Tsunekazu, Ishikawa, 921-8025 (JP); Kogure, Jun, Kanagawa, 211-8588 (JP)
(74) Representative: Hoffmann Eitle

(57) **Abstract**

A transaction control device includes a library unit configured to perform prediction of a first confirmation time at which first one or more transactions are confirmed in a first blockchain, and prediction of a second confirmation time at which second one or more transactions are confirmed in a second blockchain, perform, based on the predicted first confirmation time and the predicted second confirmation time, determination of an execution order of a plurality of transactions to be executed in the first blockchain and the second blockchain, and execute, based on the determined execution order, the plurality of transactions in the first blockchain and the second blockchain.

## Description

### FIELD OF THE INVENTION

The embodiments discussed herein are related to transaction control technology.

### BACKGROUND OF THE INVENTION

In recent years, digital virtual currency such as bitcoin (registered trademark) is becoming widespread. In virtual currencies such as bitcoins, a technique called blockchain is used. The blockchain batches transaction information (transactions) of virtual currency between participants into units called blocks.

The blockchain used for digital virtual currency transactions is being applied to various business systems, and used for respective business systems. For this reason, when developing a system in which a plurality of business systems are linked, it is desirable to use a plurality of existing blockchains to form one system. At this time, there are cases in which it is desired to execute the same transaction among the plurality of blockchains and match the data recorded in the blockchains. For example, there are cases in which for a hospital, the same transaction is executed between a blockchain of the hospital and a blockchain of a pharmacy to match data such as prescriptions.

In such a case, it is also conceivable for the system to write transactions in a plurality of blockchains simultaneously. However, transactions may not be canceled in the blockchain. For this reason, it is reasonable that the system executes the transaction on one blockchain, and if successful, executes the transaction on another blockchain instead of writing transactions to a plurality of blockchains simultaneously.

The confirmation of transactions in the blockchain is not performed each time a transaction is executed, but is performed at fixed time intervals or for each number of transactions. Each blockchain has a different time interval and a different number of transactions until the transaction is confirmed.

For example, related techniques are disclosed in Japanese Laid-open Patent Publication No. 2017-50763 and Japanese Laid-open Patent Publication No. 2017-91149.

### SUMMARY OF THE INVENTION

In the related art, there is a problem that when executing the same transaction among a plurality of blockchains, it is not possible to shorten the time to confirm the transaction.

For example, users of the system want to receive feedback on the success and failure of the determination for the transaction as soon as possible. However, in the related art, the system executes the transaction on one blockchain, and if successful, executes the transaction on the other blockchain, but there is no configuration to feedback on the success and failure of the confirmation for the transaction as soon as possible.

In one aspect, it is an object of the invention to shorten the time for confirming the transaction among a plurality of blockchains.

In order to achieve the object mentioned above, a transaction control device includes a library unit configured to perform prediction of a first confirmation time at which first one or more transactions are confirmed in a first blockchain, and prediction of a second confirmation time at which second one or more transactions are confirmed in a second blockchain, perform, based on the predicted first confirmation time and the predicted second confirmation time, determination of an execution order of a plurality of transactions to be executed in the first blockchain and the second blockchain, and execute, based on the determined execution order, the plurality of transactions in the first blockchain and the second blockchain.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWINGS

FIG. 1 is a functional block diagram illustrating a configuration of a transaction control device according to an embodiment.
FIG. 2 is a diagram illustrating an example of processing of the transaction control device according to the embodiment.
FIG. 3 is a diagram illustrating an example of a timing of TX confirmation of BC.
FIG. 4 is a diagram illustrating an example of a data structure of a BC information table according to the embodiment.
FIG. 5 is a diagram illustrating an example of a data structure of a requisite time table according to the embodiment.
FIG. 6 is a diagram illustrating an example of a data structure of a statistical information table according to the embodiment.
FIG. 7 is a diagram illustrating an example of BC order determination according to the embodiment.
FIG. 8 is a diagram illustrating another example of the BC order determination according to the embodiment.
FIG. 9 is a diagram illustrating an example of a flowchart of transaction control processing according to the embodiment.
FIG. 10 is a diagram illustrating an example of a flowchart of BC order determination processing according to the embodiment.
FIG. 11 is a diagram illustrating an example of a flowchart of TX execution processing according to the embodiment.
FIG. 12 is a diagram illustrating an example of a flowchart of BC information acquisition processing according to the embodiment.
FIG. 13 is a diagram illustrating an example of a flowchart of statistical information generation processing according to the embodiment.
FIG. 14 is a functional block diagram illustrating another configuration of the transaction control device according to the embodiment.
FIG. 15 is a diagram illustrating an application example of processing of the transaction control device according to the embodiment.
FIG. 16 is a diagram illustrating an example of a computer that executes a transaction control program.

### DESCRIPTION OF EMBODIMENTS

Hereinafter, embodiments of a transaction control device, a transaction control program, and a transaction control method disclosed in the specification will be described in detail based on drawings. The present disclosure is not limited by the embodiments.

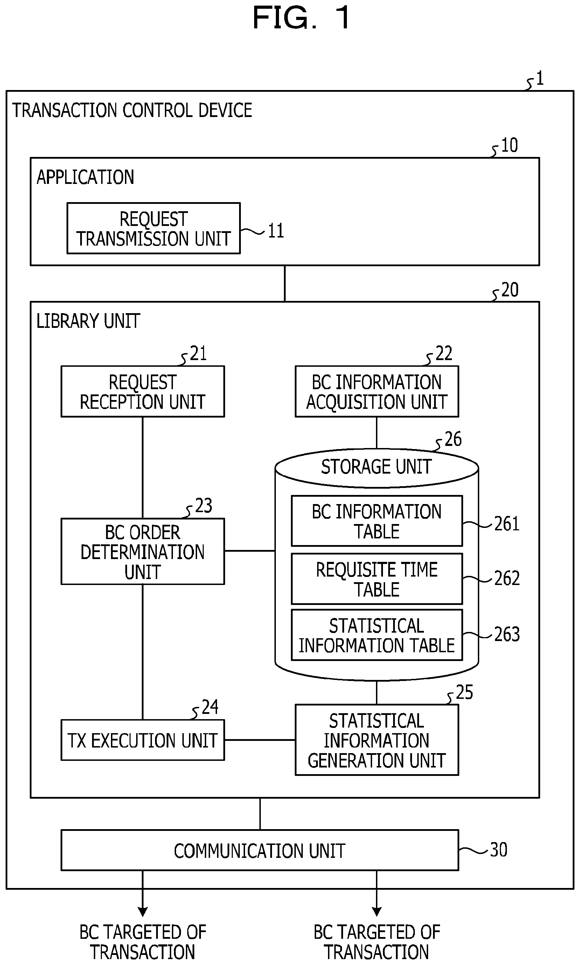

FIG. 1 is a diagram illustrating a functional configuration of a transaction control device according to the embodiment. As depicted in FIG. 1, when the same transaction is confirmed in a plurality of blockchains (BC), a transaction control device 1 predicts a confirmation time of the next transaction for each of the plurality of BCs, and first executes the next transaction in BC with an earlier prediction time. In the embodiment, the blockchain is abbreviated as "BC". The transaction may be abbreviated as "TX".

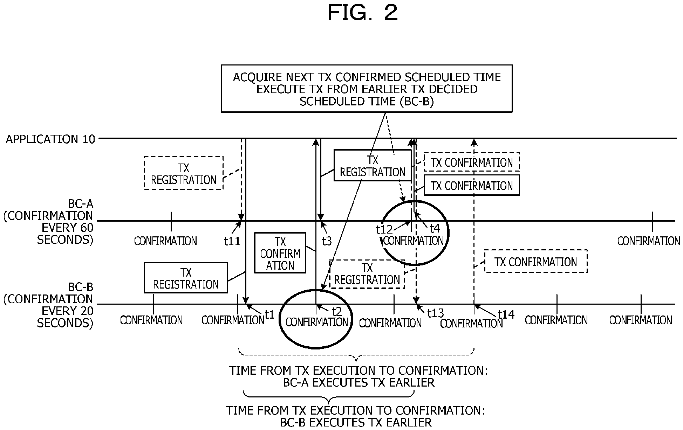

An example of processing of the transaction control device 1 according to the embodiment will be described with reference to FIG. 2. FIG. 2 is a diagram illustrating an example of processing of the transaction control device according to the embodiment. It is assumed that one BC represented by BC-A, confirms a transaction every 60 seconds, with a block generation interval of 60 seconds. It is assumed that one BC represented by BC-B, confirms a transaction every 20 seconds, with a block generation interval of 20 seconds. For example, when a plurality of un- confirmation transactions (TX) are accumulated in a queue (referred to as "TX queue"), each BC batches the plurality of transactions accumulated in the TX queue to generate a block, and confirms the transaction in block units.

As illustrated in FIG. 2, when receiving a request of registering the transaction (TX) from an application 10, the transaction control device 1 predicts a next TX confirmation time for each BC targeted of the transaction.

For example, in FIG. 2, when BC-B executes a TX registration, after a time point (t1) of receiving the request of registering TX, BC-B confirms the next TX at the next confirmation time (t2). Therefore, the transaction control device 1 predicts a next TX confirmation time as t2 for BC-B. When BC-A executes the registration of TX, after the time (t11) of receiving the request of registering TX, BC-A confirms the next TX at the next confirmation time (t12). Therefore, the transaction control device 1 predicts the next TX confirmation time as t12 for BC-A.

The transaction control device 1 executes the registration of the next TX from BC with an earlier prediction time. For example, in FIG. 2, the predicted confirmation time is earlier in BC-B than in BC-A. Therefore, the transaction control device 1 executes the registration of the next TX from BC-B with an earlier prediction time.

The reason for executing the registration of TX from BC with an earlier prediction time is as follows.

It is assumed that the transaction control device 1 executes the registration of TX for BC-A first. Then, after the time (t11) of receiving the request of registering TX, BC-A confirms TX at the next confirmation time (t12). When receiving the confirmation success of TX, the transaction control device 1 executes the registration of TX for BC-B. Then, after the time (t13) of receiving the request of registering TX, BC-B confirms TX at the next confirmation time (t14). Then, the time from the execution of TX to confirmation is calculated as (t14 - t11).

On the other hand, it is assumed that the transaction control device 1 executes the registration of TX for BC-B first. Then, after the time (t1) of receiving the request of registering TX, BC-B confirms TX at the next confirmation time (t2). When receiving the confirmation success of TX, the transaction control device 1 executes the registration of TX for BC-A. Then, after the time (t3) of receiving the request of registering TX, BC-A confirms TX at a next confirmation time (t4). Then, the time from the execution of TX to the confirmation is calculated as (t4 - t1).

Therefore, the transaction control device 1 may return feedback of the completion of the registration of TX early to the application 10 as the registration of TX from BC-B with an earlier prediction time is executed. For example, the transaction control device 1 may shorten the time of TX confirmation among a plurality of BCs.

In FIG. 2, it is assumed that the timing of TX confirmation of BC is a time point when a block generation interval determined for each BC is elapsed. However, the timing of TX confirmation of BC may be the timing that satisfies any of the following conditions. The first condition is when the size of TX not included in the block (an amount of TX waiting for incorporation into the block) does not exceed the block size, and the block generation interval is elapsed from the preceding block generation time. Since the load is estimated to be small, this is to wait for the elapse of the block generation interval and confirm TX. The second condition when the size of TX not included in the block (the amount of TX waiting for incorporation into the block) exceeds the block size. Since the load is estimated to be large, this is to confirm TX when the amount of TX waiting for incorporation into the block exceeds the block size without waiting for the elapse of the block generation interval.

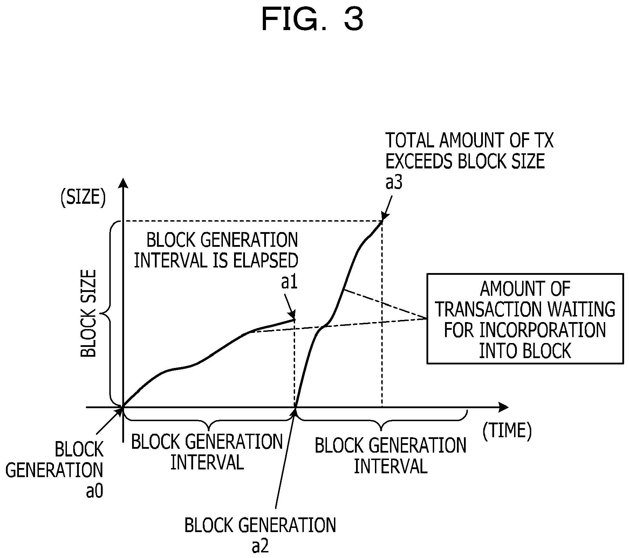

FIG. 3 is a diagram illustrating an example of a timing of TX confirmation of BC. FIG. 3 is a graph indicating the timing of TX confirmation of BC in which X-axis is time and Y-axis is block size. The first condition is the timing indicated by a symbol a1. For example, the timing of TX confirmation of BC is (a1), when the amount of TX waiting for incorporation into the block does not exceed the block size, but the block generation interval is elapsed from the time (a0) of the preceding block generation. The second condition is a timing indicated by a symbol a3. For example, the timing of TX confirmation of BC is (a3) when the amount of TX waiting for incorporation into the block exceeds the block size.

Therefore, hereinafter, the transaction control device 1 predicts the TX confirmation time for each BC as the timing of TX confirmation of BC as the timing satisfying the first condition and the timing satisfying the second condition.

Returning to FIG. 1, the transaction control device 1 includes an application 10, a library unit 20, and a communication unit 30.

The application 10 is software used when the user executes a predetermined transaction, for example. The application 10 includes a request transmission unit 11. The request transmission unit 11 transmits the request of registering a transaction (transaction) to a library unit 20.

A communication unit 30 is a processing unit that communicates with other external devices through a network. The communication unit 30 corresponds to a communication device. For example, the communication unit 30 requests an execution of a transaction (TX) for a plurality of BCs that are targets of the same transaction.

The library unit 20 includes a request reception unit 21, a BC information acquisition unit 22, a BC order determination unit 23, a TX execution unit 24, a statistical information generation unit 25, and a storage unit 26.

The storage unit 26 is a semiconductor memory device such as a random access memory (RAM) or a flash memory, or a storage device such as a hard disk or an optical disk, for example. The storage unit 26 includes a BC information table 261, a requisite time table 262, and a statistical information table 263.

The BC information table 261 stores, for each BC, BC information on a block held by each BC. The data structure of the BC information table 261 will be described below.

The requisite time table 262 accumulates, for each BC, an actual result of the requisite time for generating a block from a plurality of transactions (TX) accumulated in the TX queue. For example, it may be said that the requisite time table 262 stores, for each BC, the actual result of requisite times confirmed by the plurality of TXs accumulated in the TX queue. The data structure of the requisite time table 262 will be described below.

The statistical information table 263 stores statistical information for each BC. For example, the statistical information table 263 stores, as statistical information, an average of requisite time for block generation with respect to sizes (TX queue sizes) of a plurality of transactions (TX) accumulated in the TX queue. For example, it may be said that the statistical information table 263 stores, for each BC, the average of the requisite time for TX confirmation with respect to the sizes of a plurality of transactions (TX) accumulated in the TX queue, as statistical information. "TX queue size" is the size of TX that is not yet included in a block, and refers to the size of TX accumulated in the TX queue. The data structure of the statistical information table 263 will be described below.

The request reception unit 21 receives a request of registering the transaction (TX) from the application 10.

The BC information acquisition unit 22 acquires BC information for each BC targeted of the transaction. The BC information acquisition unit 22 holds the BC information acquired for each BC targeted of the transaction in the BC information table 261. The BC information acquisition unit 22 may periodically acquire BC information from a plurality of BCs targeted of the transaction, respectively.

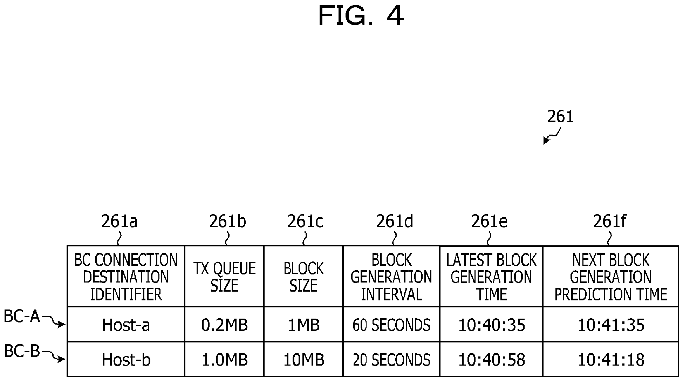

An example of the data structure of the BC information table 261 will be described with reference to FIG. 4. FIG. 4 is a diagram illustrating an example of the data structure of the BC information table according to the embodiment. As depicted in FIG. 4, the BC information table 261 stores a BC connection destination identifier 261a, a TX queue size 261b, a block size 261c, and a block generation interval 261d in association with each other. In addition, the BC information table 261 stores a latest block generation time 261e and a next block generation prediction time 261f in association with each other.

The BC connection destination identifier 261a is an identifier for uniquely identifying the connection destination of BC. The BC connection destination identifier 261a includes an internet protocol (IP) address, for example.

The TX queue size 261b is the size of transactions that is not yet included in the block, and is the size of transactions accumulated in the TX queue. The TX queue size 261b may be the number of queues (the number of transactions) included in the TX queue, or may be the total amount of transactions included in the TX queue. In the embodiment, the TX queue size 261b is described as the number of queues (the number of transactions) included in the TX queue.

The block size 261c is the size of one block. For example, the block size 261c is a size for confirming transactions included in the TX queue as a block. The block size 261c may be the number of transactions that may be included in one block, or the total amount of transactions that may be included in one block. In the embodiment, the block size 261c is described as the number of transactions that may be included in one block.

The block generation interval 261d is a time interval for generating a block. For example, it may be said that the block generation interval 261d is a time interval for confirming transactions included in the TX queue as the block.

The latest block generation time 261e is the time when the block is most recently generated. For example, it may be said that the latest block generation time 261e is the time when the transaction included in the TX queue is most recently confirmed as the block.

The next block generation prediction time 261f is a prediction time of generating a block next time. The next block generation prediction time 261f is calculated by the BC order determination unit 23 described below.

As an example, when the BC connection destination identifier 261a is "Host-a", it is stored that the TX queue size 261b is "0.2 MB", the block size 261c is "1 MB", and the block generation interval 261d is "60 seconds". In addition, when the BC connection destination identifier 261a is "Host-a", it is stored that the latest block generation time 261e is "10:40:35", and the next block generation prediction time 261f is "10:41:35".

Returning to FIG. 1, for example, when acquiring the TX queue size, the block size, the block generation interval, and the latest block generation time from the middleware of "Host-a" as the BC connection destination identifier 261a, the BC information acquisition unit 22 holds these pieces of information in the BC information table 261 in association with each other. The block size 261c and the block generation interval 261d are values set in advance during operation, and are the same every time BC information is acquired unless the set value is changed during operation. The TX queue size 261b and the latest block generation time 261e are different at each BC information acquisition time.

The BC order determination unit 23 predicts the time of confirmation of the next transaction for each of a plurality of BCs targeted of the same transaction. The BC order determination unit 23 is an example of a prediction unit or a determination unit.

For example, the BC order determination unit 23 acquires, from the BC information table 261, the TX queue size 261b, the block size 261c, the block generation interval 261d, and the latest block generation time 261e for each BC targeted of the transaction. The BC order determination unit 23 determines, for each BC, whether or not the TX queue size 261b is smaller than the block size 261c.

As an example, when the TX queue size 261b is smaller than the block size 261c, the BC order determination unit 23 adds the block generation interval 261d to the latest block generation time 261e. The BC order determination unit 23 sets the added time in the column of the next block generation prediction time 261f. It is estimated that, when the TX queue size 261b is smaller than the block size 261c, the load is small and TX of the TX queue size 261b is included in the next block. Therefore, the BC order determination unit 23 estimates the time point when the block generation interval 261d is elapsed as the next block generation prediction time 261f. The next block generation prediction time 261f may be the past time. For example, there may be no transaction that generates a block at the previous block generation time. In such a case, the BC order determination unit 23 may repeatedly add the block generation interval 261d to the next block generation prediction time 261f until the current time is exceeded.

As an example, when the TX queue size 261b is equal to or larger than the block size 261c, the BC order determination unit 23 adds the average block generation requisite time corresponding to the TX queue size 261b to the latest block generation time 261e. The BC order determination unit 23 sets the added time in the column of the next block generation prediction time 261f. This is estimated that when the TX queue size 261b is equal to or larger than the block size 261c, the load is large and TX executed at the time point of the TX queue size 261b is not included in the next block. Therefore, the BC order determination unit 23 estimates the time point when the total amount of TX (TX queue size) exceeds the block size 261c as the next block generation prediction time 261f. The average block generation requisite time may be acquired from the statistical information table 263 described below.

The BC order determination unit 23 determines the execution order of the next transaction of each of the plurality of BCs targeted of the transaction in ascending order of the predicted time. For example, the BC order determination unit 23 refers to the BC information table 261 and acquires the next block generation prediction time 261f for each BC targeted of the transaction. The BC order determination unit 23 determines the execution order of respective next transactions in an earlier order of the next block generation prediction time 261f acquired for each of the BCs targeted of the transaction.

The TX execution unit 24 executes the next transaction for each of the plurality of BCs targeted of the transaction based on the execution order determined by the BC order determination unit 23. The TX execution unit 24 is an example of an execution unit. For example, the TX execution unit 24 executes the next transaction for BC with an earlier execution order. When receiving the confirmation of the transaction, the TX execution unit 24 calculates the requisite time from the start of execution of the transaction to the confirmation, associates the calculated requisite time with the TX queue size 261b and the BC connection destination identifier 261a, and holds the requisite time table 262. The TX execution unit 24 executes the next transaction for BC with a next earliest execution order. When there is no BC with a next earliest execution order, the TX execution unit 24 ends the TX execution processing.

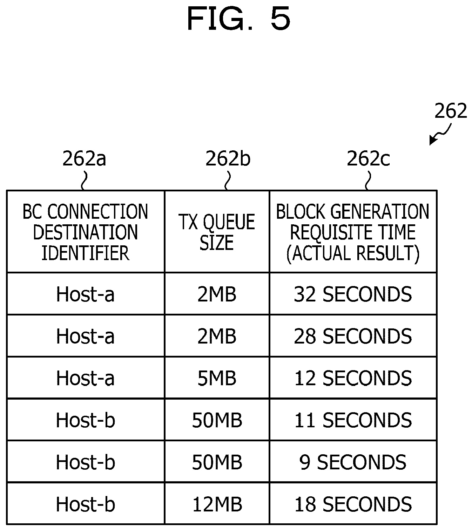

An example of the data structure of the requisite time table 262 according to the embodiment will be described with reference to FIG. 5. FIG. 5 is a diagram illustrating an example of the data structure of the requisite time table according to the embodiment. As depicted in FIG. 5, the requisite time table 262 stores a BC connection destination identifier 262a, a TX queue size 262b, and a block generation requisite time (actual result) 262c in association with each other.

The BC connection destination identifier 262a is an identifier that uniquely identifies a connection destination for BC. The BC connection destination identifier 262a corresponds to the BC connection destination identifier 261a of the BC information table 261.

The TX queue size 262b is the size of transactions that is not yet included in the block, and is the size of transactions accumulated in the TX queue. Since the TX queue size 262b corresponds to the TX queue size 261b of the BC information table 261, the description thereof will not be repeated.

The block generation requisite time (actual result) 262c is an actual result of the requisite time to generate a block. As an example, the block generation requisite time (actual result) 262c is an actual result of the requisite time from the start of execution of the transaction to its confirmation.

As an example, when the BC connection destination identifier 262a is "Host-a", it is stored that the TX queue size 262b is "2 MB", and the block generation requisite time (actual result) 262c is "32 seconds". It is stored that the TX queue size 262b is "2 MB", and the block generation requisite time (actual result) 262c is "28 seconds". It is stored that the TX queue size 262b is "5 MB", and the block generation requisite time (actual result) 262c is "12 seconds".

Returning to FIG. 1, the statistical information generation unit 25 generates, for each BC, the average of the block generation requisite time (actual result) 262c corresponding to the TX queue size as statistical information by using the requisite time table 262. For example, the statistical information generation unit 25 refers to the requisite time table 262, and acquires, for each BC connection destination identifier 262a indicated by BC, the block generation requisite time (actual result) 262c corresponding to the TX queue size 262b. The statistical information generation unit 25 calculates the average of the block generation requisite time (actual result) by using the acquired block generation requisite time (actual result) 262c, and applies it as an average block generation requisite time (prediction). The statistical information generation unit 25 holds, in the statistical information table 263, an average block generation requisite time (prediction) 263c corresponding to the TX queue size 262b for each BC connection destination identifier 262a indicated by BC. The statistical information generation unit 25 may be executed at a predetermined time point.

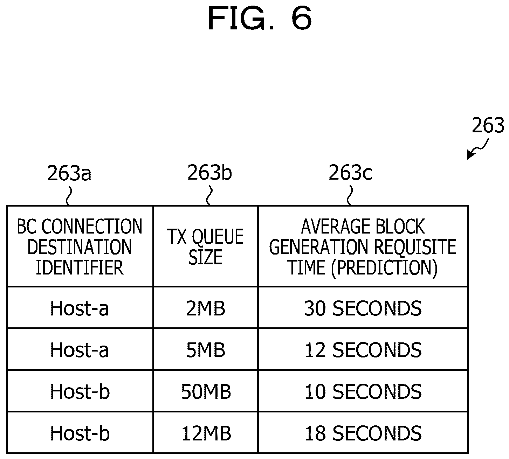

An example of the data structure of the statistical information table 263 according to the embodiment will be described with reference to FIG. 6. FIG. 6 is a diagram illustrating an example of a data structure of a statistical information table according to the embodiment. As depicted in FIG. 6, the statistical information table 263 stores a BC connection destination identifier 263a, a TX queue size 263b, and an average block generation requisite time (prediction) 263c in association with each other.

The BC connection destination identifier 263a is an identifier that uniquely identifies a connection destination for BC. The BC connection destination identifier 263a corresponds to the BC connection destination identifier 261a of the BC information table 261.

The TX queue size 263b is the size of transactions that is not yet included in the block, and is the size of transactions accumulated in the TX queue. Since the TX queue size 263b corresponds to the TX queue size 261b of the BC information table 261, the description thereof will not be repeated.

Average block generation requisite time (prediction) 263c is an average of the requisite time for generating a block.

As an example, when the BC connection destination identifier 263a is "Host-a", it is stored that the TX queue size 263b is "2 MB", and the average block generation requisite time (prediction) 263c is "30 seconds". It is stored that the TX queue size 263b is "5 MB", and the average block generation requisite time (prediction) 263c is "12 seconds".

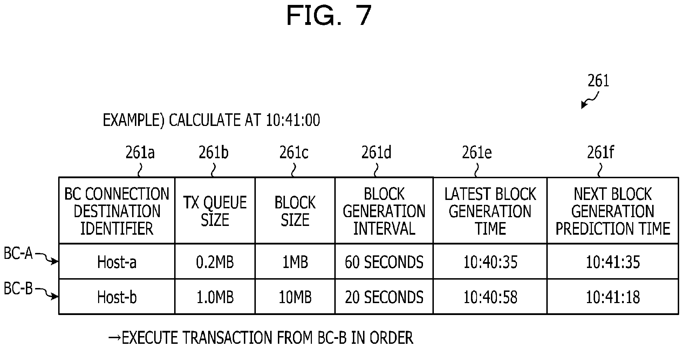

FIG. 7 is a diagram illustrating an example of BC order determination according to the embodiment. As depicted in FIG. 7, for a plurality BCs targeted of the transaction, that is, BC-A and BC-B, respective BC information is stored in the BC information table 261. For BC-A, the TX queue size 261b is 0.2 MB. The block size 261c is 1 MB. For BC-B, the TX queue size 261b is 1.0 MB. The block size 261c is 10 MB.

Under such circumstances, the BC order determination unit 23 determines, for each BC, whether or not the TX queue size 261b is smaller than the block size 261c. For BC-A, since the TX queue size 261b is 0.2 MB and the block size 261c is 1 MB, it is determined that the TX queue size 261b is smaller than the block size 261c. For BC-B, since the TX queue size 261b is 1.0 MB and the block size 261c is 10 MB, it is determined that the TX queue size 261b is smaller than the block size 261c.

When the TX queue size 261b is smaller than the block size 261c, the BC order determination unit 23 adds the block generation interval 261d to the latest block generation time 261e, and sets the added time in the column of the next block generation prediction time 261f. This is estimated that when the TX queue size 261b is smaller than the block size 261c, the load is small and TX of the TX queue size 261b is included in the next block. Therefore, the BC order determination unit 23 estimates the time point when the block generation interval 261d is elapsed as the next block generation prediction time 261f.

For BC-A, the time "10:41:35" obtained by adding "60 seconds" which is the block generation interval 261d to "10:40:35" which is the latest block generation time 261e is set in the column of the next block generation prediction time 261f. For BC-B, the time "10:41:18" obtained by adding "20 seconds" which is the block generation interval 261d to "10:40:58" which is the latest block generation time 261e is set in the column of the next block generation prediction time 261f.

The BC order determination unit 23 refers to the BC information table 261, and determines the execution order of each next transaction in the earlier order of the next block generation prediction time 261f corresponding to the plurality of BC-A and BC-B targeted of the transaction, respectively. The next block generation prediction time 261f corresponding to BC-A is "10:41:35". The next block generation prediction time 261f corresponding to BC-B is "10:41:18". Therefore, the BC order determination unit 23 determines the execution order of the next transactions in the earlier order of the next block generation prediction time 261f, for example, in the order of BC-B and BC-A.

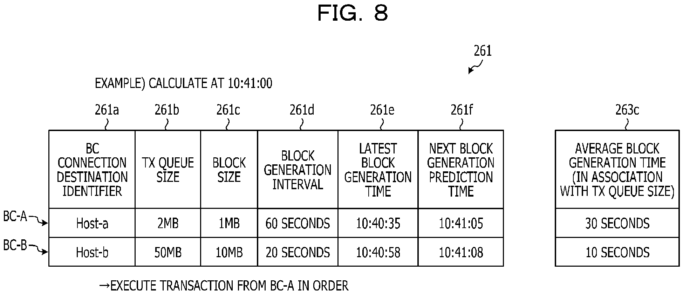

FIG. 8 is a diagram illustrating another example of BC order determination according to the embodiment. As depicted in FIG. 8, for a plurality of BCs targeted of the transaction, that is, BC-A and BC-B, respective BC information is stored in the BC information table 261. For BC-A, the TX queue size 261b is 2 MB. The block size 261c is 1 MB. For BC-B, the TX queue size 261b is 50 MB. The block size 261c is 10 MB.

Under such circumstances, the BC order determination unit 23 determines, for each BC, whether or not the TX queue size 261b is smaller than the block size 261c. For BC-A, since the TX queue size 261b is 2 MB and the block size 261c is 1 MB, it is determined that the TX queue size 261b is larger than the block size 261c. For BC-B, since the TX queue size 261b is 50 MB and the block size 261c is 10 MB, it is determined that the TX queue size 261b is larger than the block size 261c.

When the TX queue size 261b is larger than the block size 261c, the BC order determination unit 23 adds the average block generation requisite time (prediction) corresponding to the TX queue size 261b to the latest block generation time 261e, and sets the added time in the column of the next block generation prediction time 261f. This is estimated that when the TX queue size 261b is larger than the block size 261c, the load is large and TX of the TX queue size 261b is not included in the next block. Therefore, the BC order determination unit 23 estimates the time point when the total amount of TX (TX queue size) exceeds the block size 261c as the next block generation prediction time 261f.

For BC-A, the average block generation requisite time (prediction) 263c corresponding to the TX queue size 261b "2 MB" is acquired from the statistical information table 263 as "30 seconds". The time "10:41:05" obtained by adding average block generation requisite time (prediction) 263c "30 seconds" corresponding to the TX queue size 261b "2 MB" to "10:40:35" which is the latest block generation time 261e is set in the column of the next block generation prediction time 261f. For BC-B, the average block generation requisite time (prediction) 263c corresponding to the TX queue size 261b "10 MB" is acquired as "10 seconds" from the statistical information table 263. The time "10:41:08" obtained by adding average block generation requisite time (prediction) 263c "10 seconds" corresponding to the TX queue size 261b "10 MB" to "10:40:58" which is the latest block generation time 261e is set in the column of the next block generation prediction time 261f.

The BC order determination unit 23 refers to the BC information table 261, and determines the execution order of each next transaction in the earlier order of the next block generation prediction time 261f respectively corresponding to the plurality of BC-A and BC-B targeted of the transaction. The next block generation prediction time 261f corresponding to BC-A is "10:41:05". The next block generation prediction time 261f corresponding to BC-B is "10: 41: 08". Therefore, the BC order determination unit 23 determines the execution order of the next transactions in the earlier order of the next block generation prediction time 261f, for example, in the order of BC-A and BC-B.

As a result, the BC order determination unit 23 may shorten the time for confirming the transaction of data among a plurality of BCs.

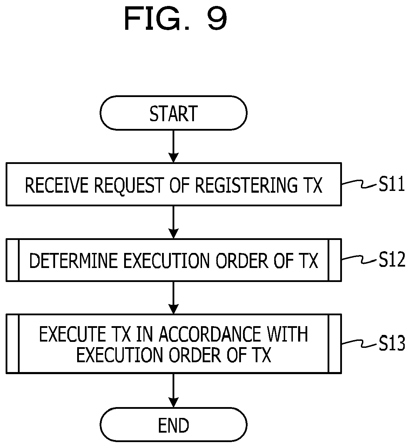

FIG. 9 is a diagram illustrating an example of a flowchart of transaction control processing according to the embodiment. As depicted in FIG. 9, the request reception unit 21 receives the request of registering the transaction (TX) transmitted from the application 10 (step S11).

Then, the BC order determination unit 23 determines the execution order of TX for each BC targeted of the transaction (step S12). The flowchart of the processing of determining the execution order of TX for BC will be described below as the BC order determination processing.

The TX execution unit 24 executes TX in accordance with the determined execution order of TX (step S13). The flowchart of the TX execution processing will be described below. The transaction control processing is ended.

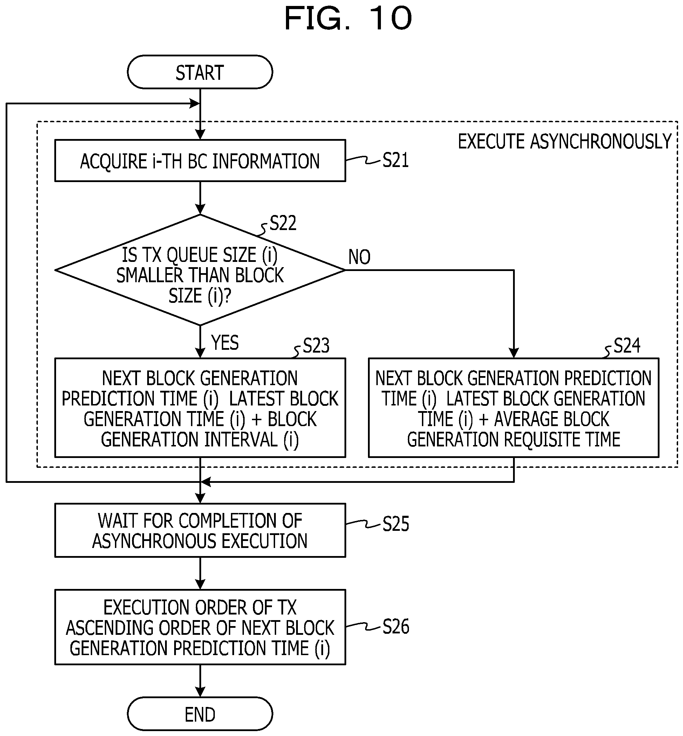

FIG. 10 is a diagram illustrating an example of a flowchart of BC order determination processing according to the embodiment. It is assumed that "i" in the flowchart of FIG. 10 is an index that indicates the BC information held in the BC information table 261. In the flowchart of FIG. 10, xx(i) indicates the item xx corresponding to the i-th BC information. Steps S21 to S24 are executed asynchronously for a plurality of BCs.

As depicted in FIG. 10, the BC order determination unit 23 acquires the BC information of the i-th BC from the BC information table 261 (step S21). The BC order determination unit 23 determines, for the i-th BC, whether or not the TX queue size 261b is smaller than the block size 261c (step S22).

When it is determined that the TX queue size 261b is smaller than the block size 261c (step S22; Yes), the BC order determination unit 23 adds the block generation interval 261d to the latest block generation time 261e. The BC order determination unit 23 sets the added time as the next block generation prediction time 261f (step S23). The next block generation prediction time 261f may be the past time. For example, this is a case in which there is no transaction that generates a block at the previous block generation time. In such a case, in step S23, the block generation interval 261d may be repeatedly added to the next block generation prediction time 261f until the current time is exceeded. The BC order determination unit 23 proceeds to step S25.

On the other hand, when it is determined that the TX queue size 261b is equal to or larger than the block size 261c (step S22; No), the BC order determination unit 23 adds the average block generation requisite time (prediction) corresponding to the TX queue size 261b to the latest block generation time 261e. The BC order determination unit 23 sets the added time as the next block generation prediction time 261f (step S24). The BC order determination unit 23 may acquire the average block generation requisite time (prediction) by using the statistical information table 263 or calculate the average block generation requisite time (prediction). For example, when there is the TX queue size 263b that matches the TX queue size 261b in the statistical information table 263, the BC order determination unit 23 may acquire the average block generation requisite time (prediction) 263c corresponding to the TX queue size 263b. When there is no TX queue size 263b that matches the TX queue size 261b in the statistical information table 263, the BC order determination unit 23 may generate a linear function using TX queue sizes 263b before and after the TX queue size 261b and an average block generation requisite time (prediction) 263c corresponding to the size, and calculate the TX queue size corresponding to the TX queue size 261b using the generated linear function. The BC order determination unit 23 proceeds to step S25.

In step S25, the BC order determination unit 23 waits for the completion of asynchronous execution (step S25). The BC order determination unit 23 determines the execution order of TX in ascending order of the next block generation prediction time (step S26). The BC order determination unit 23 ends the BC order determination processing.

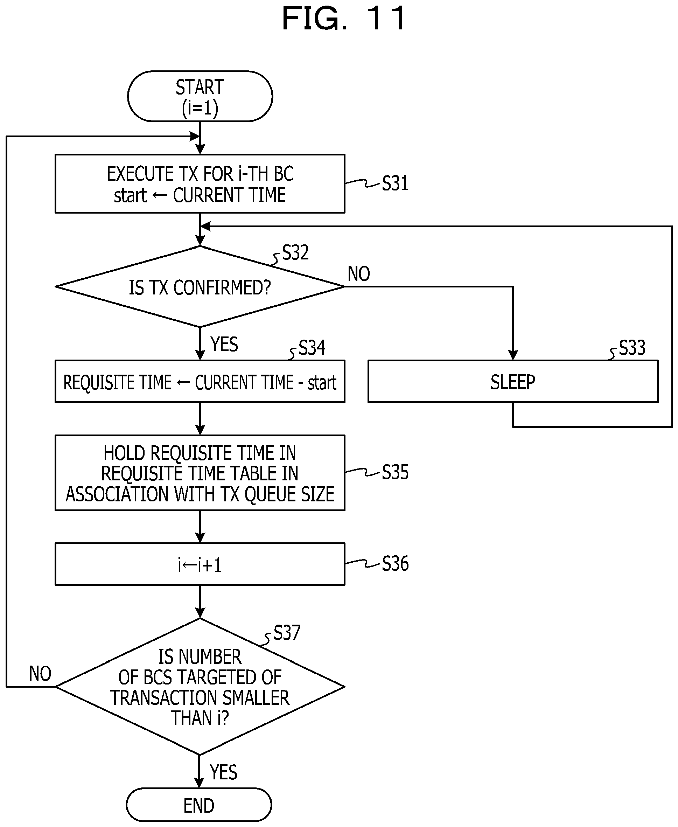

FIG. 11 is a diagram illustrating an example of a flowchart of TX execution processing according to the embodiment. It is assumed that "i" in the flowchart of FIG. 11 is an index that indicates the BC information held in the BC information table 261. It is assumed that "i" has the initial value of "1".

As depicted in FIG. 11, the TX execution unit 24 executes TX for BC of the i-th BC information (step S31). The TX execution unit 24 sets the current time at which TX is executed as start. The start is a temporary area of the storage unit 26.

The TX execution unit 24 determines whether or not TX is confirmed (step S32). When it is determined that TX is not confirmed (step S32; No), the TX execution unit 24 sleeps to wait for TX to be confirmed (step S33). The TX execution unit 24 proceeds to step S32.

When it is determined that TX is confirmed (step S32; Yes), the TX execution unit 24 sets a difference obtained by subtracting the time set as start from the current time as the requisite time (step S34). The TX execution unit 24 holds the requisite time in the requisite time table 262 in association with the TX queue size 261b corresponding to the i-th BC information (step S35).

The TX execution unit 24 adds 1 to the value set in i (step S36). The TX execution unit 24 determines whether or not the number of BCs targeted of the transaction is smaller than i (step S37). When it is determined that the number of BCs targeted of the transaction is equal to or larger than i (step S37; No), the TX execution unit 24 proceeds to step S31 to execute TX on the next i-th BC.

On the other hand, when it is determined that the number of BCs targeted of the transaction is smaller than i (step S37; Yes), the TX execution unit 24 ends the TX execution processing.

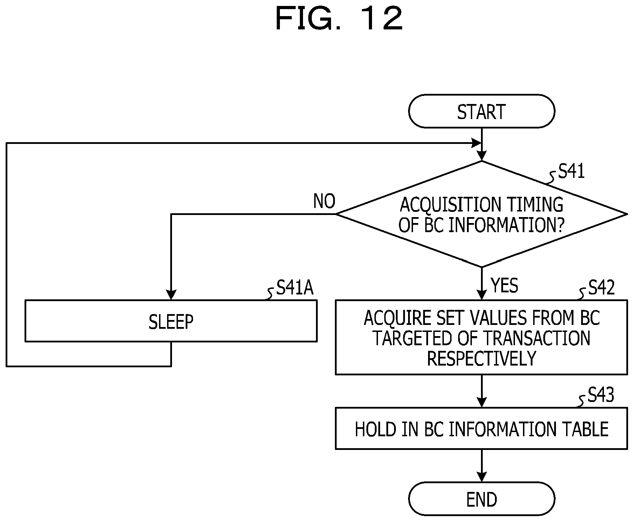

FIG. 12 is a diagram illustrating an example of a flowchart of BC information acquisition processing according to the embodiment. As depicted in FIG. 12, the BC information acquisition unit 22 determines whether or not it is the acquisition timing of BC information (step S41). When it is determined that it is not the acquisition timing of BC information (step S41; No), the BC information acquisition unit 22 sleeps and repeats the determination processing until it is the acquisition timing of BC information (step S41A).

On the other hand, when it is determined that it is the acquisition timing of the BC information (step S41; Yes), the BC information acquisition unit 22 acquires various set values from the BC targeted of the transaction, respectively (step S42). For example, the BC information acquisition unit 22 acquires the TX queue size, the block size, the block generation interval, and the latest block generation time from the middleware of each BC targeted of the transaction.

The BC information acquisition unit 22 holds the acquired various set values as BC information in the BC information table 261 in association with the BC connection destination identifier 261a of BC (step S43). The BC information acquisition unit 22 ends the BC information acquisition processing.

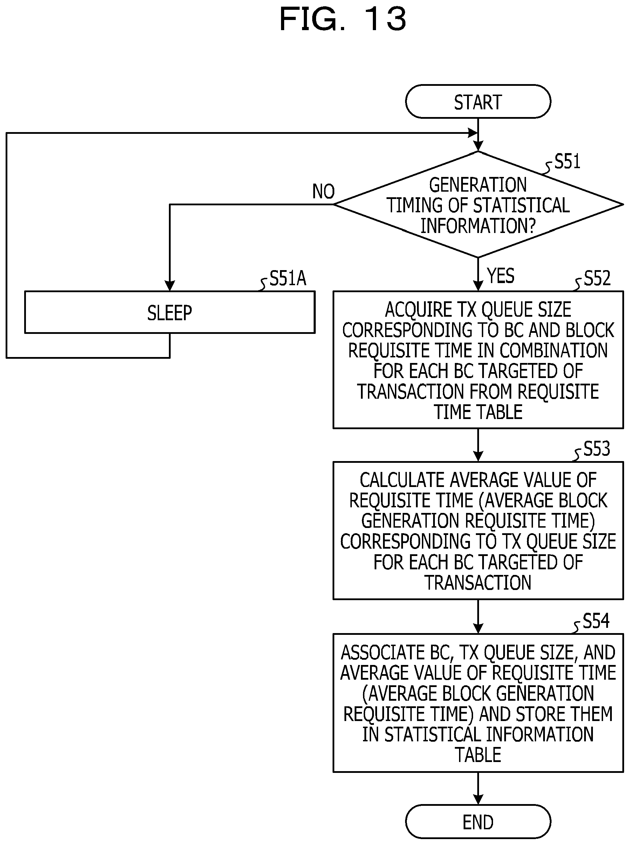

FIG. 13 is a diagram illustrating an example of a flowchart of statistical information generation processing according to the embodiment. As depicted in FIG. 13, the statistical information generation unit 25 determines whether or not it is a generation timing of statistical information (step S51). When it is determined that it is not the generation timing of the statistical information (step S51; No), the statistical information generation unit 25 sleeps and repeats the determination processing until it is the generation timing of the statistical information (step S51A).

On the other hand, when it is determined that it is the generation timing of the statistical information (step S51; Yes), the statistical information generation unit 25 acquires, from the requisite time table 262, the TX queue size 262b corresponding to BC and the block generation requisite time (actual result) 262c in combination for each BC targeted of the transaction (step S52).

The statistical information generation unit 25 uses the combination of the TX queue size 262b acquired and the block generation requisite time (actual result) 262c for each BC targeted of the transaction to calculate an average value the block generation requisite time corresponding to the TX queue size for each BC targeted of the transaction (step S53).

The statistical information generation unit 25 associates the BC targeted of the transaction, the TX queue size, and the calculated average value of the block generation requisite time, and holds them in the statistical information table 263 (step S54). The statistical information generation unit 25 ends the statistical information generation processing.

According to the embodiment, it is described that the transaction control device 1 includes the application 10 together with the library unit 20. However, the application 10 may be provided in an external device of the transaction control device 1, and the application 10 may be connected to the transaction control device 1 through the network.

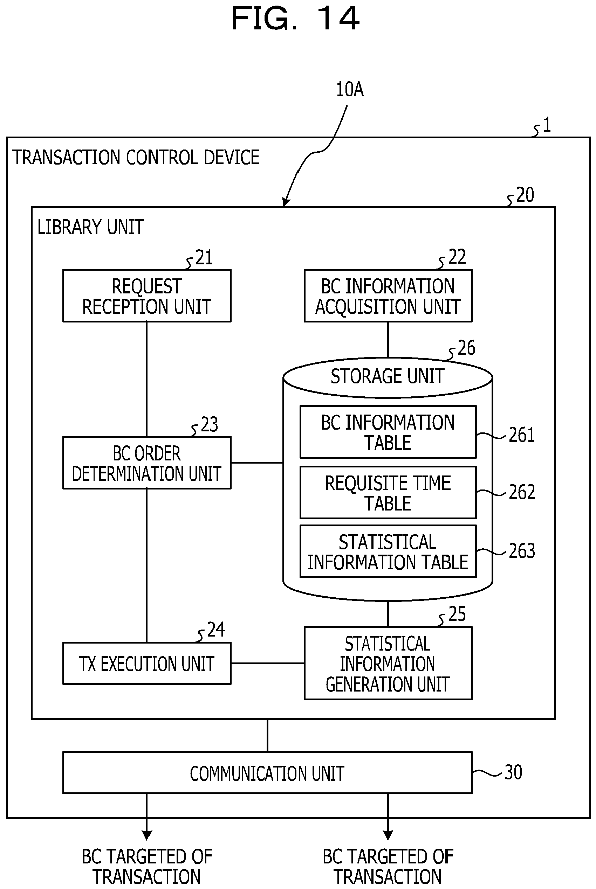

FIG. 14 is a functional block diagram illustrating another configuration of the transaction control device according to the embodiment. The same components as those of the transaction control device 1 illustrated in FIG. 1 of the embodiment are denoted by the same reference numerals, and the description of the same components and operations will not be repeated.

The difference between FIG. 1 and FIG. 14 is that the application 10 is changed to an application 10A. The application 10A is connected to the transaction control device 1 through the network. The request reception unit 21 receives the request of registering the transaction (TX) from the application 10A. The BC order determination unit 23 predicts the time of confirmation of the next TX for each of a plurality of BCs targeted of the transaction, and determines the execution order of the next TX in the ascending order of the predicted times. The TX execution unit 24 executes the next TX for each of the plurality of BCs targeted of the transaction based on the determined execution order .... As a result, the BC order determination unit 23 may shorten the time of TX confirmation among a plurality of BCs.

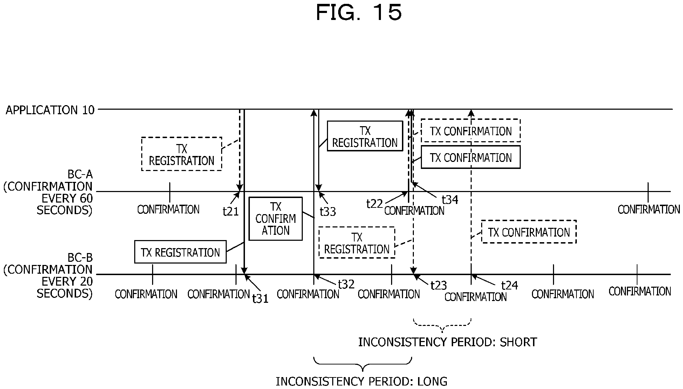

In the embodiment, it is explained that the transaction control device 1 predicts the time of confirmation of the next transaction for each of a plurality of BCs targeted of the same transaction, and executes the transaction first from BC with the earliest prediction time. As a result, the transaction control device 1 may shorten the time for confirming the transaction among a plurality of BCs targeted of the transaction. However, the transaction control device 1 is not limited thereto, and this configuration may be applied. The transaction control device 1 may shorten a time in which the data consistency is not achieved among a plurality of BCs targeted of the transaction. For example, the transaction control device 1 predicts a period in which there is a data inconsistency, among BCs when the next transaction is executed for each of a plurality of BCs targeted of the transaction, and executes a transaction first from BC having a shorter predicted period of inconsistency. In order to realize such a case, as an example, the transaction control device 1 may predict the time of confirmation of the next transaction for each of a plurality of BCs of the transaction, and execute the transaction first from BC with a later prediction time. The case of shortening the time in which the data consistency is not achieved will be described with reference to FIG. 15.

FIG. 15 is a diagram illustrating an application example of processing of the transaction control device according to the embodiment. It is assumed that one BC represented by BC-A, confirms a transaction (TX) every 60 seconds, with a block generation interval of 60 seconds. It is assumed that one BC represented by BC-B confirms TX every 20 seconds, with the block generation interval of 20 seconds.

As depicted in FIG. 15, the transaction control device 1 predicts, for each BC, the period in which the data consistency is not achieved when the next TX is executed. For example, when BC-A executes the registration of the next TX, after the time point (t21) of receiving the request of registering TX, TX is confirmed at the next confirmation time point (t22). Subsequently, after the time point (t23) of receiving the request of registering TX, BC-B confirms TX at the next confirmation time point (t24). Therefore, the transaction control device 1 predicts, for BC-A, the period in which the data consistency is not achieved as a period of (t24 - t23).

When BC-B executes the registration of the next TX, TX is confirmed at the next confirmation time point (t32) after the time point (t31) of receiving the request of registering TX. Subsequently, after the time point (t33) of receiving the request of registering TX, BC-A confirms TX at the next confirmation time point (t34). Therefore, the transaction control device 1 predicts, for BC-B, the period in which the data consistency is not achieved as a period of (t34 - t32).

The transaction control device 1 executes the registration of TX from BC having the shorter period in which the predicted consistency is not achieved. In FIG. 15, the period in which the predicted consistency is not achieved is shorter in BC-A than in BC-B. Therefore, it is preferable that the transaction control device 1 executes the registration of TX from BC-A having the short predicted period. As a result, the transaction control device 1 may shorten the time in which the data consistency is not achieved among the plurality of BCs.

According to the above embodiment, the transaction control device 1 predicts the time of confirmation of the next transaction for each of a plurality of BCs targeted of the transaction. The transaction control device 1 determines the execution order of the next transaction for each of the plurality of BCs based on the predicted time. The transaction control device 1 executes the next transaction of each of the plurality of BCs based on the determined execution order. According to this configuration, the transaction control device 1 may shorten the time for confirming the transaction among BCs by executing the next transaction based on the predicted confirmation time of the next transactions of each of the plurality of BCs. As a result, the transaction control device 1 may early return feedback of the transaction to the user at the time of executing the transaction in a plurality of BCs.

According to the above embodiment, the transaction control device 1 determines the execution order of the next transactions of each of the plurality of BCs in an earlier order of the predicted time. According to this configuration, it is possible to shorten the time for confirming the transaction among BCs by executing the next transaction in an earlier order of the predicted confirmation time of the next transaction for each of the plurality of BCs.

According to the above embodiment, the transaction control device 1 predicts a period in which there is a data inconsistency among a plurality of BCs when the next transaction is executed based on the time of confirmation of the predicted next transaction. The transaction control device 1 determines the execution order of the next transactions of each of the plurality of BCs based on the period having the predicted inconsistency. According to this configuration, the transaction control device 1 may shorten a time in which the data consistency is not achieved among the plurality of BCs.

According to the above embodiment, the transaction control device 1 determines, for each of the plurality of BCs, whether or not the transaction queue size indicating the size of the transaction not yet included in the block is smaller than the block size. When it is determined that the transaction queue size is smaller than the block size, for each of a plurality of BCs, the transaction control device 1 adds the block generation interval determined for each BC to the time when the preceding block is generated and predicts the confirmation time of the next transaction. When it is determined that the transaction queue size is equal to or greater than the block size, for each of a plurality of BC, the transaction control device 1 adds the predicted block generation requisite time corresponding to the transaction queue size to the time when the preceding block is generated and predicts the confirmation time of the next transaction. According to this configuration, the transaction control device 1 may determine the execution order of the next transaction of each of the plurality of BCs in ascending order by predicting the confirmation time of the next transaction of the plurality of BCs.

According to the above embodiment, the transaction control device 1 further holds, for each of a plurality of BCs, the requisite time for actually executing a transaction in association with the transaction queue size. The transaction control device 1 calculates the predicted block generation requisite time corresponding to the transaction queue size for each of a plurality of BCs using the held information, and holds the calculated time as statistical information. According to this configuration, the transaction control device 1 may use the statistical information to calculate the predicted block generation requisite time corresponding to the transaction queue size.

The transaction control device 1 may be realized by mounting the functions of the library unit 20 and the like described above on the information processing device such as a known personal computer and a workstation.

Each component of the illustrated device is not necessarily physically configured as illustrated. For example, the specific aspect of the distribution and integration of the devices is not limited to the illustrated one, and all or a part thereof may be configured to be functionally or physically distributed or integrated in any unit in accordance with various loads, usage conditions, and the like. For example, the request reception unit 21 and the BC order determination unit 23 may be integrated as one unit. On the other hand, the BC order determination unit 23 may be distributed into an estimation unit that estimates the next block generation prediction time for each BC, and a determination unit that determines the order of BCs for TX execution using the estimated information. The storage unit 26 may be connected through a network as an external device of the transaction control device 1.

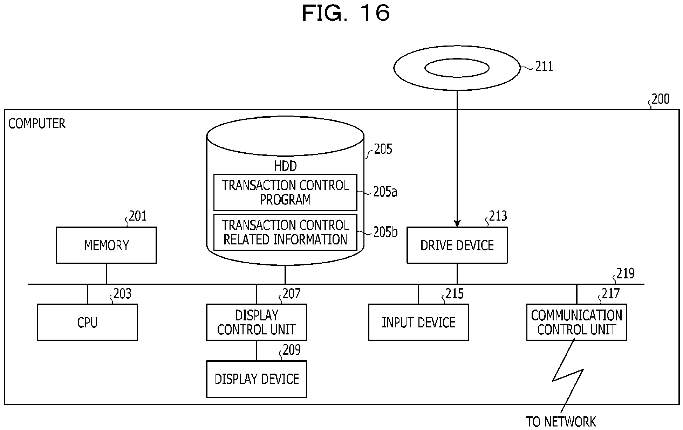

The various processes described in the above embodiments may be realized by executing a program prepared in advance on a computer such as a personal computer or a workstation. Therefore, hereinafter, an example of a computer that executes a transaction control program for realizing the same function as the transaction control device 1 illustrated in FIG. 1 will be described. FIG. 16 is a diagram illustrating an example of a computer that executes a transaction control program.

As depicted in FIG. 16, a computer 200 includes a CPU 203 that executes various arithmetic processing, an input device 215 that receives input of data from a user, and a display control unit 207 that controls the display device 209. The computer 200 further includes a drive device 213 that reads a program or the like from a storage medium, and a communication control unit 217 that transmits and receives data with other computers through a network. The computer 200 also includes a memory 201 for temporarily storing various information, and a hard disk drive (HDD) 205. The memory 201, the CPU 203, a HDD 205, the display control unit 207, the drive device 213, the input device 215, and the communication control unit 217 are connected by a bus 219.

The drive device 213 is a device for a removable disk 211, for example. The HDD 205 stores a transaction control program 205a and transaction related information 205b.

The CPU 203 reads the transaction control program 205a, loads it into the memory 201, and executes it as a processing. Such a processing corresponds to each functional unit of the transaction control device 1. The transaction related information 205b corresponds to the BC information table 261, the requisite time table 262 and the statistical information table 263. For example, the removable disk 211 stores each information such as the transaction control program 205a.

The transaction control program 205a may not necessarily be stored in the HDD 205 from the beginning. For example, the program is stored in a "portable physical media" such as a flexible disk (FD) inserted in the computer 200, a compact disk read only memory (CD-ROM), a digital versatile disk (DVD), a magnetooptical disk, an integrated circuit (IC) card. The computer 200 may read out the transaction control program 205a from these and execute the same.

## Claims

1. A transaction control device comprising:
a library unit configured to:
perform prediction of a first confirmation time at which first one or more transactions are confirmed in a first blockchain, and prediction of a second confirmation time at which second one or more transactions are confirmed in a second blockchain,
perform, based on the predicted first confirmation time and the predicted second confirmation time, determination of an execution order of a plurality of transactions to be executed in the first blockchain and the second blockchain, and
execute, based on the determined execution order, the plurality of transactions in the first blockchain and the second blockchain.

2. The transaction control device according to claim 1,
wherein the first one or more transactions are one or more transactions executed in the first blockchain between the first confirmation time and a previous confirmation time.

3. The transaction control device according to claim 1,
wherein the execution order is determined based on an order of the first confirmation time and the second confirmation time.

4. The transaction control device according to claim 1,
wherein the determination of the execution order includes
predicting, based on the first confirmation time and the second confirmation time, a period in which there is data inconsistency between the first blockchain and the second blockchain when the plurality of transactions are executed, and
determining the execution order based on the period.

5. The transaction control device according to claim 1,
wherein the prediction of the first confirmation time includes
determining whether a transaction queue size indicating a size of a transaction not yet included in a block for the first blockchain is smaller than a size of the block,
when it is determined that the transaction queue size is smaller than the size of the block, predicting the first confirmation time by adding a generation interval of a specific block of the first blockchain to a time when a preceding block is generated in the first blockchain, and
when it is determined that the transaction queue size is not smaller than the size of the block, predicting the first confirmation time by adding a block generation time predicted according to the transaction queue size to the time when the preceding block is generated in the first blockchain.

6. The transaction control device according to claim 5,
wherein the memory is configured to store time information in which a requisite time for executing a transaction is associated with the transaction queue size, and
the block generation time is determined based on the time information.

7. A computer-implemented transaction control method comprising:
predicting a first confirmation time at which first one or more transactions are confirmed in a first blockchain, and a second confirmation time at which second one or more transactions are confirmed in a second blockchain;
determining, based on the predicted first confirmation time and the predicted second confirmation time, an execution order of a plurality of transactions to be executed in the first blockchain and the second blockchain; and
executing, based on the determined execution order, the plurality of transactions in the first blockchain and the second blockchain.

8. The transaction control method according to claim 7,
wherein the first one or more transactions are one or more transactions executed in the first blockchain between the first confirmation time and a previous confirmation time.

9. The transaction control method according to claim 7,
wherein the execution order is determined based on an order of the first confirmation time and the second confirmation time.

10. The transaction control method according to claim 7,
wherein the determining includes
predicting, based on the first confirmation time and the second confirmation time, a period in which there is data inconsistency between the first blockchain and the second blockchain when the plurality of transactions are executed, and
determining the execution order based on the period.

11. The transaction control method according to claim 7,
wherein the predicting of the first confirmation time includes
determining whether a transaction queue size indicating a size of a transaction not yet included in a block for the first blockchain is smaller than a size of the block,
when it is determined that the transaction queue size is smaller than the size of the block, predicting the first confirmation time by adding a generation interval of a specific block of the first blockchain to a time when a preceding block is generated in the first blockchain, and
when it is determined that the transaction queue size is not smaller than the size of the block, predicting the first confirmation time by adding a block generation time predicted according to the transaction queue size to the time when the preceding block is generated in the first blockchain.

12. The transaction control method according to claim 11,
wherein the memory is configured to store time information in which a requisite time for executing a transaction is associated with the transaction queue size, and
the block generation time is determined based on the time information.

13. A transaction control program which, when executed by one or more computers, causes the one or more computers to execute the transaction control method according to any of claims 7 to 12.
